# FASCICULE DE BREVET EUROPEEN

(11) **EP 0 753 257 B1**
(45) Date de publication et mention de la délivrance du brevet: **02.05.2003**
(21) Numéro de dépôt: 96401521.8
(22) Date de dépôt: 10.07.1996
(51) Int. Cl.: A01N 43/90

(54) **Composition et procédé pour réduire la stérilité et stimuler la floraison des plantes de mais**
Zusammensetzung und Verfahren zur Verminderung der Sterilität und zur Stimulierung der Blüte von Maispflanzen
Composition and process for the reduction of sterility and for the stimulation of flowering of maize plants

(30) Priorité: 12.07.1995 FR 9508450
(43) Date de publication de la demande: 15.01.1997
(73) Titulaire: FEDERATION NATIONALE DE LA PRODUCTION DES SEMENCES DE MAIS ET DE SORGHO, 64121 Montardon (FR)
(72) Inventeur: Foueillassar, Xavier, 64320 Bizanos (FR); Lejeune, Pierre, 4102 Ougree (BE)
(74) Mandataire: Kédinger, Jean-Paul

(56) Documents cités:
- FR-A- 1 355 242
- CHEMICAL ABSTRACTS, vol. 119, no. 21, 1993 Columbus, Ohio, US; abstract no. 219564w, D. HRADECKA ET AL.: "The effect of cytokinins on the yield of some cereal plants." XP002017320 & PHYSIOL. BIOCHEM. CYTOKININS PLANTS, SYMP., 1990, pages 245--247,
- CHEMICAL ABSTRACTS, vol. 117, no. 7, 1992 Columbus, Ohio, US; abstract no. 69088m, K.D. SMICIKLAS ET AL.: "Role of cytokinin in enhanced productivity of maize supplied with ammonium and nitrate ions." XP002017321 & PLANT SOIL , vol. 142, no. 2, 1992, pages 307--313,
- CHEMICAL ABSTRACTS, vol. 99, no. 7, 1983 Columbus, Ohio, US; abstract no. 50530n, T. ANDONOVA ET AL.: "Changes in the free cytokinins of maize seedlings during soil drought." XP002017322 & FIZIOL. RAST. (SOFIA) , vol. 9, no. 1, 1983, pages 55-59,
- JOURNAL OF AGRICULTURAL AND FOOD CHEMISTRY, vol. 36, no. 4, 1988, WASHINGTON US, pages 746-748, XP002017319 P.A. HEDIN ET AL.: "Effects of plant bioregulators on nutrients, insect resistance, and yield of corn (Zea mays L.)."
- CENTRAL PATENTS INDEX, BASIC ABSTRACTS JOURNAL Week 7802, Derwent Publications Ltd., London, GB; AN 1978-03237A, XP002017323 & JP 52 141 355 A (KUMIAI CHEM IND) 25 Novembre 1977
- Physiol. Biochem. Cytokinins Plants, Symp, 1990 (pub. 1992), 245-7, Hradecka D and Petr J.
- SMICIKLAS AND BELOW PLANT AND SOIL vol. 142, 1992, pages 307 - 313
- HEDIN ET AL J. AGRIC. FOOD CHEM. vol. 36, 1988, pages 742 - 745

## Description

La présente invention a pour objet un procédé pour réduire la stérilité en épis des plantes de maïs.

Un phénomène important de stérilité des épis et de formation d'épis anormalement ramifiés dans les productions de maïs est apparu récemment. Les géniteurs sensibles à ce phénomène ont pris une place prépondérante et représentent en 1995 la majeure partie (70 %) des surfaces de production en France. De plus, cette sensibilité se transmet souvent dans les hybrides, entraînant des pertes de rendement catastrophiques pour le producteur de maïs.

Un important programme de recherche a été lancé par la Demanderesse pour trouver des explications à ce phénomène de stérilité, dans le but de mettre au point des solutions techniques à ce problème.

Il est ainsi apparu que la stérilité susmentionnée est due à des températures fraîches (de l'ordre de 10° C) appliquées sur les plantes au stade critique de l'initiation de l'épi, les futurs épis pouvant avorter du début de l'initiation de l'épi jusqu'à un stade plus avancé ; ce stress est aggravé par un éclairement important et par un excès d'eau au niveau des racines. Des causes de stérilité similaires ont été observées pour d'autres plantes de céréales.

Par ailleurs, l'analyse chez le maïs des teneurs en cytokinines et auxines de l'exsudat de xylème a permis de mettre en évidence que le passage des plantes au froid, provoque une chute de ces teneurs au moment précis de l'initiation de l'inflorescence (épi), entraînant son avortement.

Chemicals Abstracts, vol. 119, no. 21, 1993, abstract no. 219564w décrit l'effet de certaines cytokinines sur le rendement de certaines plantes céréalières.

Chemicals Abstracts, vol. 117, no. 7, 1992, abstract no. 69088m décrit un procédé d'application répétée de 6-benzylaminopurine à des maïs durant le stade de croissance végétative en relation avec la nutrition azotée.

Chemicals Abstracts, vol. 99, no. 7, abstract no. 50530n concerne l'effet bénéfique de l'application de diphénylurée ou de kinétine à des jeunes plantes de maïs après une courte période de déficit hydrique. J. Agric. Food Chem., 1988, 36, 746-748 décrit l'effet de plusieurs régulateurs de croissance, dont une cytokinine, sur la composition chimique des graines de maïs.

Central Patents Index, Basic Abstracts Journal, Derwent Publications Ltd.; AN 78-03237 XP002017323 et JP-A-52 141 355 décrit l'effet de la 6-benzylaminopurine sur l'accélération et l'homogénéisation de la floraison chez les végétaux.

FR-1 355 242 décrit un procédé pour augmenter le rendement utile des plantes à graines, ce procédé consistant à traiter par de la N⁶-benzyladénine ces plantes en cours de croissance active.

La Demanderesse a envisagé de traiter les plantes de maïs, dans des conditions bien précises, avec un certain nombre de cytokinines et auxines connues et constaté que des cytokinines, dont notamment la 6-benzylaminopurine, avaient la propriété de réduire la stérilité en épis des plantes de maïs.

En conséquence, un objet de la présente invention est de proposer un procédé pour réduire la stérilité en épis des plantes de maïs, ce procédé comprenant l'application, sur lesdites plantes avant le stade d'initiation des ébauches de l'inflorescence, d'une composition contenant un véhicule et au moins une cytokinine à titre de principe actif.

A titre de cytokinine, une préférence toute particulière est donnée à la 6-benzylaminopurine (en abrégé BAP) dont la formule est la suivante :

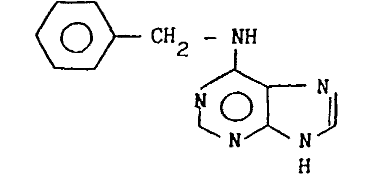

Il est à noter que la BAP peut être utilisée telle qu'elle (c'est-à-dire sous la forme base) ou sous la forme d'un sel avec un acide tel que son chlorhydrate. On peut préparer ce chlorhydrate par exemple en faisant réagir, dans 980 g d'eau, 10 g d'acide chlorhydrique (solution aqueuse à 38 % en poids) avec 10 g de BAP sous agitation jusqu'à dissolution complète (environ 1 heure).

Conformément à l'invention, le véhicule de la composition comprend de l'eau et un adjuvant favorisant la pénétration du principe actif dans les plantes de céréales.

Cet adjuvant est constitué par un mélange comprenant un glycol et un mouillant.

Ledit glycol est avantageusement le monopropylène glycol, un polyéthylène glycol liquide ou un mélange de ceux-ci. Le polyéthylène glycol liquide a de préférence un poids moléculaire de 200.

Quant au mouillant, il peut en particulier être choisi dans la gamme des mouillants agricoles habituellement utilisés pour améliorer l'efficacité des pesticides. Il peut être choisi parmi les huiles végétales émulsionnées, les amines grasses éthoxylées de préférence par 15 moles d'oxyde d'éthylène et les alcools éthoxylés. Les mouillants préférés du type alcools éthoxylés sont les sels de polyoxyéthylène sorbitan, les sels de polyoxyéthylène sorbitan avec un acide carboxylique et en particulier le monolaurate de polyoxyéthylène sorbitan tel que le Tween^{R} 20.

L'adjuvant susmentionné comprend notamment de 15 à 25 % en poids de mouillant et de 75 à 85 % en poids de glycol et de préférence 20 % en poids de mouillant et 80 % en poids de glycol.

Le véhicule de la composition mise en oeuvre dans le procédé selon l'invention peut de plus contenir un agent de protection contre les rayons UV. A titre de tel agent, on citera par exemple les lignosulfonates de sodium, les azurants optiques (parmi lesquels les produits commercialisés sous les marques Calcofluor^{R} white M2R et Leucophor^{R} BS) et les colorants absorbant dans la région de 240 nm (en particulier le rouge cochenille).

En outre, dans le cas où la cytokinine mise en oeuvre est la BAP ou un sel de BAP, l'application est avantageusement réalisée pour appliquer une quantité de principe actif correspondant à 0,025-0,15 mg de BAP par plante, et de préférence 0,055 mg de BAP par plante, à l'un quelconque des stades 3 à 12 feuilles, de préférence 4 à 10 feuilles.

Par ailleurs, dans la composition selon l'invention le rapport pondéral de l'adjuvant susmentionné au principe actif peut notamment être de 15 à 30 et de préférence de 20.

Il est avantageux selon l'invention que la composition susmentionnée résulte de la dilution appropriée d'un concentré avant utilisation pour le traitement des plantes de maïs.

Ce concentré pourra par exemple avoir la composition suivante :
- chlorhydrate de BAP 6-8 g/l
- polyéthylène glycol (PM = 200) 100-140 g/l
- Tween 20^{R} 25-35 g/l
- rouge cochenille 0,005-0,02 g/l
- eau q.s. pour 1 litre

Dans les tests dont la description va suivre, il est fait utilisation du concentré suivant :
- chlorhydrate de BAP 7,5 g/l
- polyéthylène glycol (PM = 200) 120,0 g/l
- Tween^{R} 20 30,0 g/l
- rouge cochenille 0,01 g/l
- eau q.s. pour 1 litre
qui sera dilué avant utilisation pour obtenir une composition de traitement dosée à 10⁻⁴ mole/l de BAP sous forme de chlorhydrate.

Un certain nombre de tests ont été effectués pour illustrer l'efficacité du procédé selon l'invention.

Ces tests comprennent des tests en laboratoire et des tests au champ, avec mise en oeuvre du concentré décrit ci-dessus dilué pour présenter une teneur de BAP sous forme de chlorhydrate (BAP, HCl) de 10⁻⁴ mole/litre (ce qui correspond à une teneur en BAP de 22,5 mg/l) ; ce concentré dilué est appelé ci-après composition d'essai.

### A. TESTS EN LABORATOIRE

### 1. Exemple 1 : Action de la composition d'essai sur la stérilité

### a) Matériel et méthodes

Les plantes de maïs ont été cultivées en phytotron dans des conditions de culture standards :
- photopériode : 16 h
- irradiance : 40 000 lux
- température de jour : 24° C
- température de nuit : 18° C
- humidité ≥ 70 %
- arrosage : solution nutritive tous les deux jours dès le stade 2-3 feuilles, puis une fois par jour au stade 5-6 feuilles
- support : mélange terreau horticole-perlite 50/50

Des plantes de maïs ont été maintenues en conditions standards sans aucun traitement (témoins), d'autres ont été transférées pour une durée de 7 jours à 10° C constants au moment de l'initiation de l'épi au stade 7-8 feuilles. Ce stress induit une très forte proportion d'avortement de l'épi principal.

Trois expériences ont été effectuées avec la composition d'essai, celle-ci étant appliquée trois jours de suite à partir du stade 6 feuilles à raison de 2,5 ml par plante et par jour, soit dans le cornet, soit en vaporisation foliaire; la dose de BAP ainsi appliquée est d'environ 0,055 mg par plante et par jour.

### b) Résultats

| Exp. | Traitement (20 plantes par série) | Nombre de feuilles | | % d'avortements de l'épi principal |
|---|---|---|---|---|
| | | Totales | Jusqu'à l'épi principal | |
| 1 application dans le cornet | Témoins | 18.0 ± 0.6 | 11.7 ± 0.6 | 30 % |
| | au stade 6F | 18.4 ± 0.5 | 12.3 ± 0.6 | 5 % |
| | au stade 7F | 18.1 ± 0.6 | 12.0 ± 0.5 | 40 % |
| | au stade 8F | 17.5 ± 0.8 | 11.5 ± 0.9 | 35 % |
| 2 vaporisation sur les feuilles | Témoins | 18.2 ± 0.8 | 12.1 ± 0.7 | 35 % |
| | 7 jours à 10°C stade 8 F | 18.4 ± 0.5 | 12.1 ± 0.5 | 95 % |
| | au stade 6F | 18.7 ± 0.7 | 12.7 ± 0.5 | 0 % |
| | au stade 6F+7j. à 10°C au stade 8F | 18.1 ± 0.5 | 12.2 ± 0.5 | 40 % |
| 3 vaporisation sur les leuilles | Témoins | 18.3 ± 0.6 | 11.9 ± 0.5 | 30 % |
| | 7 jours à 10°C stade 8 F | 17.9 ± 0.6 | 11.9 ± 0.5 | 90 % |
| | au stade 6F +7j. à 10°C au stade 8F | 19.1 ± 0.8 | 12.4 ± 0.2 | 35 % |
| F = Feuilles | | | | |

Tableau 1 : Effet du traitement par la composition d'essai sur le nombre de feuilles, le niveau de l'épi et le pourcentage d'avortements.

L'expérience 1 montre que l'application de la composition d'essai pendant trois jours à partir du stade 6 feuilles visibles, dans le cornet des plantes a un effet bénéfique sur le développement de l'épi principal ; il y a en effet une réduction du pourcentage d'avortements par rapport aux témoins. Cet effet ne se manifeste pas si l'application est effectuée plus tard, aux stades 7 ou 8 feuilles.

Dans l'expérience 2, la composition d'essai a été appliquée au stade 6 feuilles par vaporisation. L'une des séries a de plus été soumise au traitement de 7 jours à 10° C qui induit un maximum d'avortements de l'épi principal. On observe un effet bénéfique de la composition d'essai, aussi bien chez les plantes maintenues à température ordinaire que chez celles soumises au froid au stade 8 feuilles. Ces résultats sont confirmés dans l'expérience 3.

### 2. Exemple 2 : Action de stimulation de la floraison (épiaison) par la composition d'essai

### a) Matériel et méthodes

Trois expériences indépendantes ont été réalisées pour étudier les effets de la composition d'essai sur le rendement. Les plantes ont été traitées comme précédemment au stade 6 feuilles par vaporisation de la composition d'essai à raison de 2,5 ml par plante.

Les plantes ont été traitées trois jours successifs dans les deux premières expériences, et une seule fois dans la 3ème expérience. Au stade 8 feuilles, la moitié des plantes traitées a été soumise à une température de 10° C pendant 7 jours comme décrit précédemment. Les plantes ont été maintenues en phytotron jusqu'au stade 12 feuilles puis transplantées en serre sous une photopériode de 16 h avec un éclairage supplémentaire fournissant 80 000 lux au sommet des plantes et une température moyenne de 25°C-30° C pendant le jour a été maintenue jusqu'à maturité.

### b) Résultats

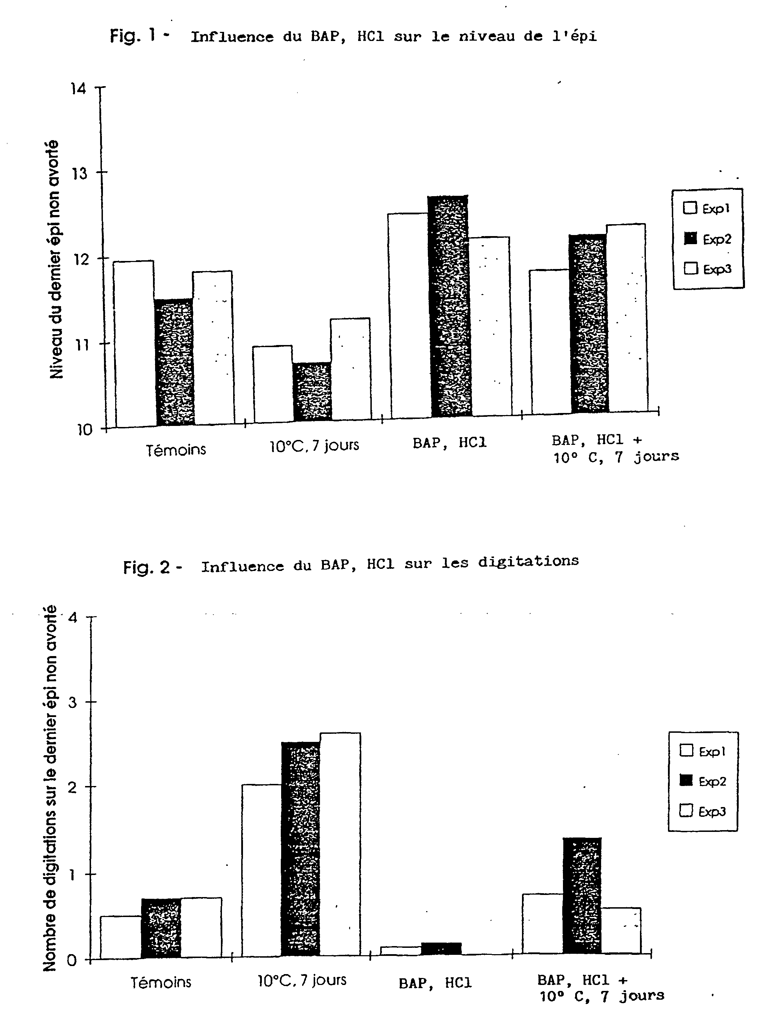

Les résultats ont été reportés dans les figures 1, 2, 3, 4 annexées.

La figure 1 montre l'effet des traitements [traitement de 7 jours à 10° C ; traitement par la composition d'essai (BAP, HCl)] sur le niveau du dernier épi dans les trois expériences. La composition d'essai élève le niveau de l'épi et inverse l'effet du froid, donc empêche les avortements de l'épi primaire.

La figure 2 montre l'effet de ces mêmes traitements sur le nombre de digitations potentielles sur le dernier épi non avorté. Il est rappelé que la digitation correspond à la fabrication et au développement de bourgeons sur le pédoncule de l'épi. Le froid provoque une augmentation du nombre de digitations, ce qui confirme l'idée que la cause première de la digitation est l'avortement de l'épi supérieur et le développement d'un épi secondaire plus digité. Le BAP, HCl diminue la digitation, que les plantes aient subi ou non un traitement par le froid.

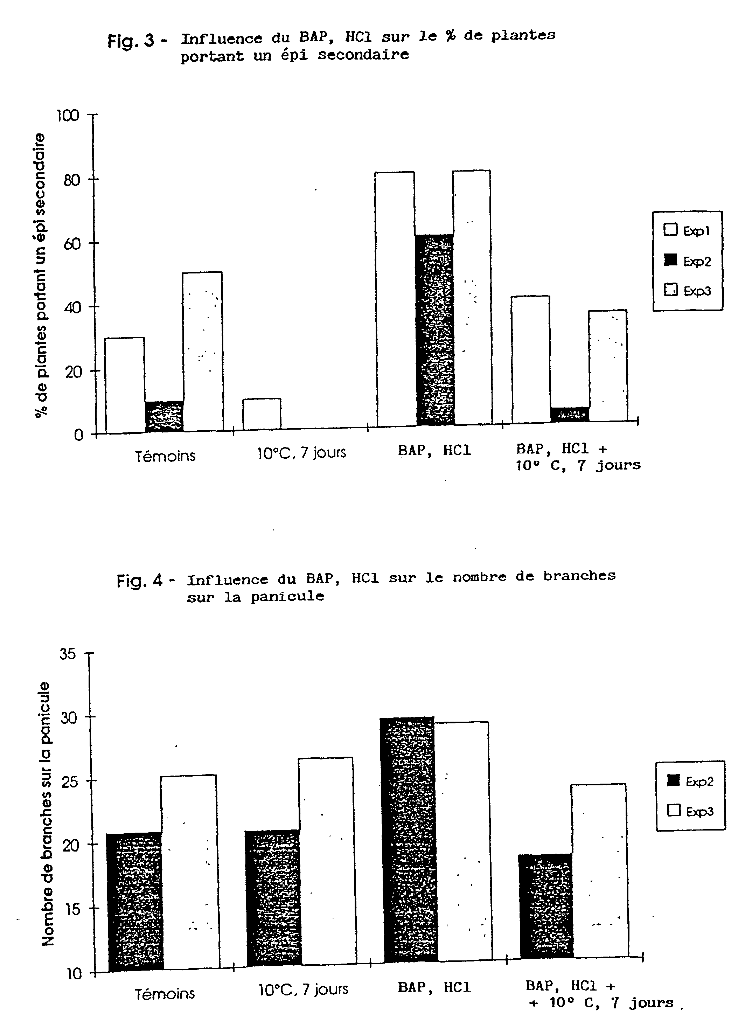

La figure 3 montre l'effet desdits traitements sur le pourcentage de plantes portant un deuxième épi fécondé. Le froid diminue considérablement la proportion de ces plantes. Le traitement au BAP, HCI a l'effet inverse ; 30 à 50% des plantes de plus que le témoin possèdent un deuxième épi. L'effet stimulateur du BAP, HCl sur les bourgeons axillaires est important.

La figure 4 montre l'effet desdits traitements sur le nombre de branches sur la panicule. Le froid n'affecte pas le nombre de branches sur la panicule. En l'absence de froid, les séries traitées au BAP, HCl présentent des panicules plus ramifiées que le témoin (50 % en plus).

### B. TESTS AU CHAMP

Les essais ont été conduits en 1991, 1992 et 1994 sur le même matériel végétal que celui utilisé en phytotron.

### 1. Essais réalisés en 1991

Les traitements ont été réalisés en mouillant les plantes manuellement, la dose appliquée correspond à 0,055 mg de BAP par plante. Le dispositif était de 3 blocs (60 plantes par bloc) et les stades choisis étaient 4 feuilles, 5 feuilles, 6 feuilles et 7 feuilles. Les semis ont été effectués à deux dates.

Les résultats sont représentés dans le tableau 2 ci-dessous.

| SEMIS | STADE | DATE TRAITEMENT | GRAINS/ RANG | EPIS/ PLANTE | GRAINS /m2 | Quintaux /ha | Feuilles au-dessus de l'epi | % d'avortements.de.l'épi principal |
|---|---|---|---|---|---|---|---|---|
| S1 | 4F | 10/06 | 22.3 a | 1.2 b | 2 975 b | 42.2 ab | 4.4 | 8 |
| 21/05 | 5F | 14/06 | 19.8 a | 1.0 b | 2 340 b | 36.3 ab | 5.4 | 15 |
| | 6F | 20/06 | 21.4 a | 1.0 b | 2 350 b | 36.6 abc | 5.7 | 32 |
| Témoin 1 | | | 21.3 a | 1.2 | 2 849 b | 43.8 a | 5.7 | 28 |
| S2 | 5F | 28/06 | - | 1.0 b | 2 353 b | 27.9 b | 6.2 | 29 |
| 11/06 | 6F | 04/07 | - | 1.6 a | 3 697 a | 39.4 a | 5.7 | 26 |
| | 7F | 10/07 | - | 1.0 b | 2 424 b | 28.2 b | 5.7 | 25 |
| Témoin 2 | | | | 1.0 b | 2 327 b | 27.9 b | 6.1 | 29 |
| F = feuilles a, b, c : groupes homogènes de moyennes (test de Newman et Keuls 5 %) | | | | | | | | |

Tableau 2 - Influence du BAP, HCI sur le rendement au champ
Dose : 0,055 mg de BAP/plante
Dates de semis : 21 Mai et 11 Juin

Il ressort que dans le premier semis l'effet de diminution du pourcentage d'avortements est significatif avec également une stimulation de la production du nombre d'épis par plante pour le traitement réalisé au stade 4 feuilles. Dans le second semis, très tardif, le témoin a donné un rendement assez faible, l'effet stimulateur de l'épiaison du BAP, HCl a été très important pour le traitement à 6 feuilles et le rendement approche le résultat du 1er semis.

### 2. Essais réalisés en 1992

Le dispositif et la dose de BAP ont été les mêmes qu'en 1991. Trois dates de semis ont été réalisées. Les rendements n'ont pas pu être évalués en raison d'une forte verse avant récolte.

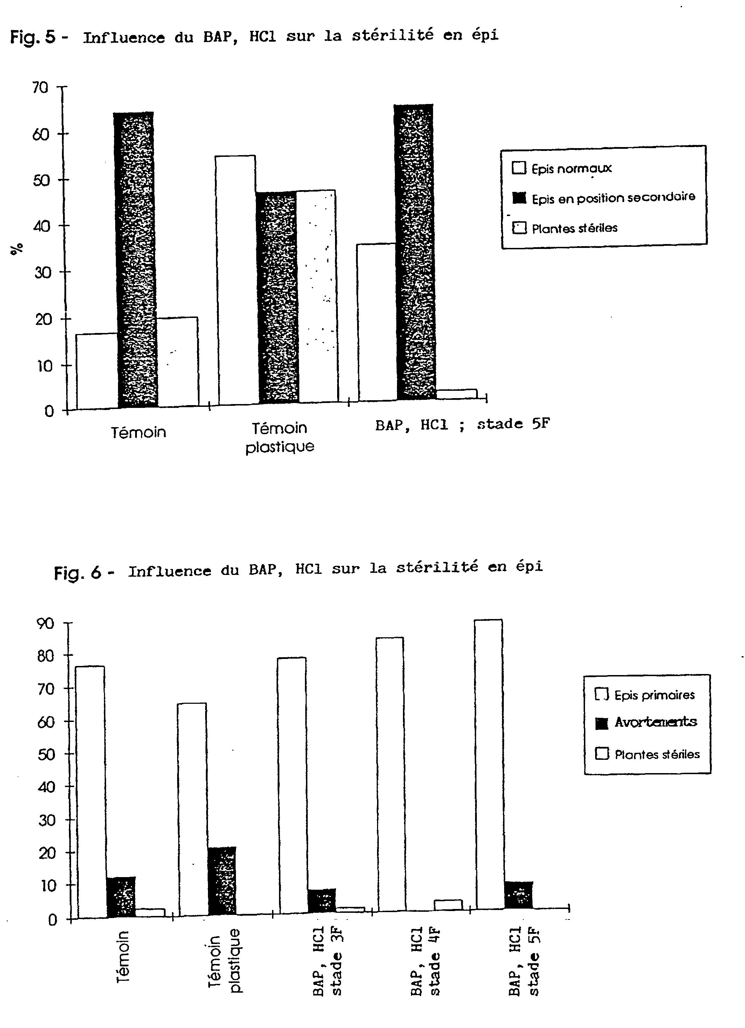

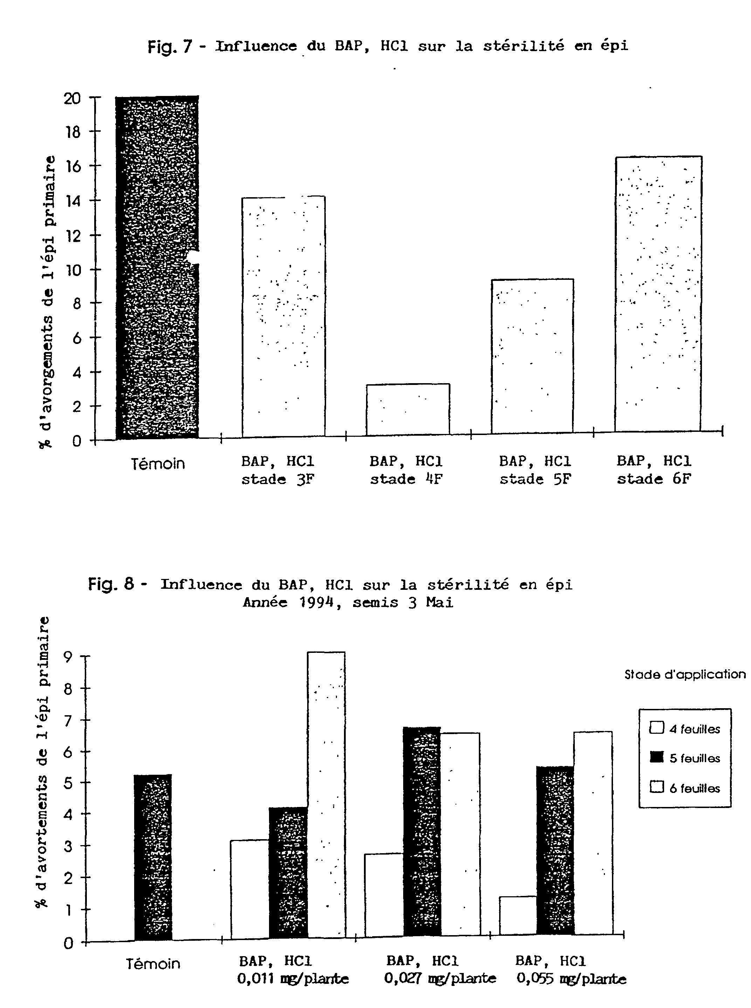

Les figures 5, 6, 7 représentent les résultats obtenus pour les trois semis.

La figure 5 montre l'effet spectaculaire du BAP, HCI de réduction des avortements de l'épi primaire et du nombre de plantes entièrement stériles.

La figure 6 confirme le résultat du 1er semis, l'effet réducteur d'avortements de l'épi primaire étant plus important pour le traitement au stade 4 feuilles.

La figure 7 montre que le stade d'efficacité maximum du BAP, HCl se situe à 4 feuilles. La réduction des avortements est très importante : 3 % d'avortements d'épi primaire contre 20 % pour le témoin.

### 3. Essais réalisés en 1994

Le dispositif au champ a été le même. La composition d'essai a été appliquée à raison de 0,011 mg de BAP par plante, 0,027 mg de BAP par plante et 0,055 mg de BAP par plante, par pulvérisation dans le cornet.

La figure 8 donne le pourcentage d'avortements de l'épi primaire en fonction des stades d'application de la composition d'essai et des doses appliquées de BAP, HCl.

Ces essais montrent que l'effet du BAP, HCl sur la réduction des avortements de l'épi primaire est optimal pour la dose de 0,055 mg de BAP par plante appliquée au stade 4 feuilles.

## Revendications

1. Procédé pour réduire la stérilité en épis des plantes de maïs, caractérisé en ce ce qu'il comprend l'application, sur lesdites plantes avant le stade d'initiation des ébauches d'inflorescence, d'une composition contenant un véhicule et au moins une cytokinine à titre de principe actif.

2. Procédé selon la revendication 1, **caractérisé en ce que** la cytokinine est constituée par la 6-benzylaminopurine ou un sel de la 6-benzylaminopurine.

3. Procédé selon la revendication 1 ou 2, **caractérisé en ce que** la cytokinine est constituée par le chlorhydrate de la 6-benzylaminopurine.

4. Procédé selon la revendication 1, 2 ou 3, **caractérisé en ce que** le véhicule comprend de l'eau et un adjuvant favorisant la pénétration du principe actif dans les plantes de mais.

5. Procédé selon la revendication 4, **caractérisé en ce que** l'adjuvant est constitué par un mélange comprenant un glycol et un mouillant.

6. Procédé selon la revendication 5, **caractérisé en ce que** le glycol est choisi dans le groupe constitué par le monopropylène glycol, un polyéthylène glycol liquide et un mélange de ceux-ci.

7. Procédé selon la revendication 6, **caractérisé en ce que** le polyéthylène glycol liquide a un poids moléculaire de 200.

8. Procédé selon la revendication 5, 6 ou 7, **caractérisé en ce que** le mouillant est choisi dans le groupe constitué par les huiles végétales émulsionnées, les amines grasses éthoxylées par 15 moles d'oxyde d'éthylène et les alcools éthoxylés.

9. Procédé selon la revendication 8, **caractérisé en ce que** le mouillant du type alcool éthoxylé est un sel de polyoxyéthylène sorbitan.

10. Procédé selon la revendication 9, **caractérisé en ce que** le mouillant est constitué par le monolaurate de polyoxyéthylène sorbitan.

11. Procédé selon l'une quelconque des revendications 5 à 10, **caractérisé en ce que** l'adjuvant comprend de 15 à 25 % en poids de mouillant et de 75 à 85 % en poids de glycol.

12. Procédé selon l'une quelconque des revendications 4 à 11, **caractérisé en ce que** le rapport pondéral de l'adjuvant au principe actif est de 15 à 30.

13. Procédé selon la revendication 1, mettant en oeuvre la 6-benzylaminopurine ou un sel de cette dernière, **caractérisé en ce que** l'application est réalisée pour appliquer une quantité de 0,025 à 0,15 mg de 6-benzylaminopurine par plante à l'un quelconque des stades 3 à 12 feuilles.

## Patentansprüche

1. Verfahren zur Verminderung der Sterilität der Kolben von Maispflanzen, **dadurch gekennzeichnet, dass** es umfasst das Aufbringen einer Zusammensetzung, die ein Vehiculum und mindestens ein Cytokinin als Wirkstoff enthält, auf die genannten Pflanzen vor dem Anfangs-Stadium der Anlage der Blütenstände bzw. Kolben.

2. Verfahren nach Anspruch 1, **dadurch gekennzeichnet, dass** das Cytokinin aus 6-Benzylaminopurin oder einem Salz von 6-Benzylaminopurin besteht.

3. Verfahren nach Anspruch 1 oder 2, **dadurch gekennzeichnet, dass** das Cytokinin aus dem Hydrochlorid von 6-Benzylaminopurin besteht.

4. Verfahren nach Anspruch 1, 2 oder 3, **dadurch gekennzeichnet, dass** das Vehiculum Wasser und ein Adjuvans umfasst, welches das Eindringen des Wirkstoffs in die Maispflanzen fördert.

5. Verfahren nach Anspruch 4, **dadurch gekennzeichnet, dass** das Adjuvans aus einer Mischung besteht, die ein Glycol und ein Netzmittel umfasst.

6. Verfahren nach Anspruch 5, **dadurch gekennzeichnet, dass** das Glycol ausgewählt wird aus der Gruppe, die besteht aus Monopropylenglycol, einem flüssigen Polyethylenglycol und einer Mischung derselben.

7. Verfahren nach Anspruch 6, **dadurch gekennzeichnet, dass** das flüssige Polyethylenglycol ein Molekulargewicht von 200 hat.

8. Verfahren nach Anspruch 5, 6 oder 7, **dadurch gekennzeichnet, dass** das Netzmittel ausgewählt wird aus der Gruppe, die besteht aus emulgierten Pflanzenölen, mit 15 mol Ethylenoxid ethoxylierten Fettaminen und ethoxylierten Alkoholen.

9. Verfahren nach Anspruch 8, **dadurch gekennzeichnet, dass** das Netzmittel vom ethoxylierten Alkohol-Typ ein Salz von Polyoxyethylensorbitan ist.

10. Verfahren nach Anspruch 9, **dadurch gekennzeichnet, dass** das Netzmittel aus dem Monolaurat von Polyoxyethylensorbitan besteht.

11. Verfahren nach einem der Ansprüche 5 bis 10, **dadurch gekennzeichnet, dass** das Adjuvans 15 bis 25 Gew.-% Netzmittel und 75 bis 85 Gew.-% Glycol umfasst.

12. Verfahren nach einem der Ansprüche 4 bis 11, **dadurch gekennzeichnet, dass** das Gewichtsverhältnis zwischen dem Adjuvans und dem Wirkstoff 15 bis 30 beträgt.

13. Verfahren nach Anspruch 1, bei dem man das 6-Benzylaminopurin oder ein Salz desselben verwendet, **dadurch gekennzeichnet, dass** das Auftragen durchgeführt wird zum Aufbringen einer Menge von 0,025 bis 0,15 mg 6-Benzylaminopurin pro Pflanze in einem der 3 bis 12 Blatt-Stadien.

## Claims

1. Process for reducing sterility in ears of corn plants, **characterised in that** it comprises the application to said plants, prior to the stage of initiation of incipient inflorescence, of a composition containing a medium and at least one cytokinin as an active principle.

2. Process according to claim 1, **characterised in that** the cytokinin is constituted by 6-benzylaminopurine or a salt of 6-benzylaminopurine.

3. Process according to claim 1 or 2, **characterised in that** the cytokinin is constituted by 6-benzylaminopurine hydrochlorite.

4. Process according to claim 1, 2 or 3, **characterised in that** the medium includes water and a adjuvant favouring the penetration of the corn plants by the active principle.

5. Process according to claim 4, **characterised in that** the adjuvant is constituted by a mixture including a glycol and a wetting agent.

6. Process according to claim 5, **characterised in that** the glycol is chosen from the group constituted by monopropylene glycol, a liquid polyethylene glycol and a mixture thereof.

7. Process according to claim 6, **characterised in that** the liquid polyethylene glycol has a molecular weight of 200.

8. Process according to claim 5, 6 or 7, **characterised in that** the wetting agent is chosen from the group constituted by emulsified vegetable oils, fatty amines ethoxylated with 15 moles of ethylene oxide and ethoxylated alcohols.

9. Process according to claim 8, **characterised in that** the wetting agent of the ethoxylated alcohol type is a polyoxyethylene sorbitan.

10. Process according to claim 9, **characterised in that** the wetting agent is constituted by polyoxyethylene sorbitan monolaurate.

11. Process according to any one of claims 5 to 10, **characterised in that** the adjuvant includes 15 to 25% by weight of wetting agent and 75 to 85% by weight of glycol.

12. Process according to any one of claims 4 to 11, **characterised in that** the weight ratio of the adjuvant to the active principle is 15 to 30.

13. Process according to claim 1, implementing the 6-benzylaminopurine or a salt of the latter, **characterised in that** the application is designed to apply a quantity of 0.025 to 0.15 mg of 6-benzylaminopurine per plant at any one of the 3 to 12-leaf stages.
